# EUROPÄISCHE PATENTSCHRIFT

(11) **EP 0 829 509 B1**
(45) Veröffentlichungstag und Bekanntmachung des Hinweises auf die Patenterteilung: **20.12.2000**
(21) Anmeldenummer: 97115231.9
(22) Anmeldetag: 02.09.1997
(51) Int. Cl.: C08K 5/07, C08K 3/16, C08L 29/04, C09J 129/04, C08J 5/18

(54) **Polyvinylalkohol-Kompositionen**
Polyvinyl alcohol compositions
Composition d'alcool polyvinylique

(30) Priorität: 09.09.1996 DE 19636510
(43) Veröffentlichungstag der Anmeldung: 18.03.1998
(73) Patentinhaber: Clariant GmbH, 65929 Frankfurt am Main (DE)
(72) Erfinder: Jakob, Martin, Dr., 65779 Kelkheim (DE); Gutte, Richard, 65929 Frankfurt (DE)

(56) Entgegenhaltungen:
- EP-A- 0 686 682
- EP-A- 0 778 290
- EP-A- 0 778 315

## Beschreibung

Die Erfindung betrifft selbstvernetzende Polyvinylalkohol-Kompositionen in Form wäßriger Lösungen mit einer verlängerten Lagerstabilität, ein Verfahren zu ihrer Herstellung und ihre Verwendung zur Herstellung von bei Raumtemperatur vernetzenden Filmen, beispielsweise zur Herstellung kochwasserresistenter Klebverbindungen und Folien.

Klebstoffe auf Basis von Polyvinylalkohol sind im Stand der Technik bekannt. In Form wäßriger Lösungen können sie aufgrund ihrer Klebkraft hervorragend als Rohstoff zum Verkleben von cellulosischen Substraten wie Holz, Papier oder Karton eingesetzt werden. Solche Einsatzgebiete sind beispielsweise die Herstellung von speziellen Papierlaminaten, Spiral- oder Parallelhülsen. Neben einer großen Palette von anderen Anwendungen finden Polyvinylalkohol-Filme auch Verwendung als Verpackungsmaterial, wobei sie alleine für sich oder auch als Bestandteil von Laminaten in Verbundfolien Verwendung finden.

Ein bekannter Nachteil dieser Anwendungen besteht in der Hydrophilie des Polyvinylalkohols, der bei Verwendung als Klebstoff-Film eine schlechte Wasserbeständigkeit der Klebverbindungen hervorruft oder in Folien eine unzureichende Sperrwirkung gegenüber Sauerstoff bei hoher Gasfeuchte bewirkt. Durch Verwendung von kaltwasserunlöslichen, vollverseiften Polyvinylalkoholen kann zum Beispiel für die Anwendung als Papierklebstoff eine gewisse Resistenz gegenüber der Einwirkung von kaltem Wasser bewirkt werden, jedoch sind kochwasserbeständige Klebverbindungen nicht zugänglich, des weiteren wasserfeste Klebfilme oder Gießfolien aus den leicht herzustellenden wäßrigen Lösungen kaltwasserlöslicher teilverseifter Polyvinylalkohole.

Grundsätzlich ist es bekannt, Polyvinylalkohol zur Verringerung der Wasserempfindlichkeit mit einer Vielzahl möglicher Reagenzien zu vernetzen, beispielsweise mit Hilfe bifunktioneller Aldehyde (s. C.A. Finch in Polyvinyl Alcohol, C.A. Finch (Ed.); John Wiley and Sons, New York (1992), Kap. 9).

Kochwasserresistente Polyvinylalkohol-Filme, die sich als flexibles Verpackungsmaterial eignen, sind nach US-A 4,376,183 herstellbar aus einer wäßrigen Komposition, welche in wäßriger Form gelösten Polyvinylalkohol, zur Vernetzung befähigte Dialdehyde, sowie in dieser Lösung dispergierte Metall-Orthophosphate, vorzugsweise von Aluminium oder Eisen, enthält. Die Kochwasserbeständigkeit entfaltet sich nach einer Wärmebehandlung.

JP-A 117991/77 (Chemical Abstracts 88:74939) beschreibt die Herstellung kochwasserbeständiger Polyvinylalkohol-Formmassen aus wäßrigen Lösungen durch Vernetzung mit difunktionellen Aldehyden mit mindestens 3 C-Atomen in Gegenwart saurer Katalysatoren, darunter auch Salzen, und einer nachfolgenden Wärmebehandlung bei 50 °C.

Die Kochwasserresistenz von naßgesponnenen Polyvinylalkohol-Fasern läßt sich nach JP-A 163609/93 (Chemical Abstracts 119:141112) dadurch verbessern, daß diese mit Dialdehyden wie Glutardialdehyd oder Acetalen von Dialdehyden, beispielsweise Tetramethoxypropan, in schwefelsaurem Milieu behandelt werden. Die wäßrige Polyvinylalkohol-Lösung enthält vor dem Verspinnen zugesetzte Borsäure.

Wasserfeste Polyvinylalkohol-Kompositionen, die sich für Klebstoffe und Schlichtemittel eignen beschreibt JP-A 157860/94 (Chemical Abstracts 121:257180). Sie enthalten neben Polyvinylalkohol Chitosan, Aldehyde, beispielsweise Glyoxal, Reduktionsmittel und Radikalfänger, beispielsweise Hydrochinonmonomethylether. In der Gruppe der Reduktionsmittel finden sich Schwefel-Verbindungen, darunter auch Natriumhydrogensulfit.

Obwohl im angeführten Stand der Technik im Falle einer Vernetzung über bifunktionelle Aldehyde mit mindestens 3 Kohlenstoffatomen im sauren Medium kochwasserresistente Polyvinylalkohol-Filme grundsätzlich zugänglich sind, zeigt Vergleichsbeispiel 1, daß solche Zusammensetzungen rasch zum Gelieren neigen, also nur begrenzt lagerstabil sind. Dieses Merkmal ist insbesondere nachteilig für den Einsatz als Klebstoff.

Aufgabe der vorliegenden Erfindung war es demnach, Polyvinylalkohol-Kompositionen in Form wäßriger Lösungen bereitzustellen, die sich durch eine verlängerte Lagerstabilität von mindestens vier Wochen auszeichnen und aus denen beim Trocknen, vorzugweise schon bei Raumtemperatur, Filme mit einem hohen Maß an Kochwasserresistenz hergestellt werden können.

Diese Aufgabe wird durch Kompositionen in Form wäßriger Lösungen gelöst, die neben Polyvinylalkohol wenigstens bifunktionelle, vollständig als wasserlösliches Hydrogensulfit-addukt maskierte Aldehyde mit wenigstens 3 Kohlenstoffatomen enthalten, aus denen durch als Säure reagierende Verbindungen zur Vernetzung befähigte Aldehydgruppen kontrolliert freisetzbar sind.

Gegenstand der vorliegenden Erfindung ist eine Komposition in Form einer wäßrigen Lösung, enthaltend Polyvinylalkohol, mindestens einen vollständig als wasserlösliches Hydrogensulfit-addukt maskierten Polyaldehyd mit wenigstens 3 Kohlenstoffatomen sowie mindestens eine in Wasser als Säure reagierende Verbindung.

Polyvinylalkohol wird generell durch Verseifen von Polyvinylacetat hergestellt. Geeigneter Polyvinylalkohol besitzt vorzugsweise einen Hydrolysegrad von 70 bis 100 mol-% und eine Viskosität der 4%igen wäßrigen Lösung von 2 bis 70 mPa·s. Insbesondere werden aus Gründen der Wasserlöslichkeit Polyvinylalkohole mit einem Hydrolysegrad von 80 bis 98 mol-% verwendet. Besonders geeignet ist kaltwasserlöslicher teilverseifter Polyvinylalkohol vom Hydrolysegrad von ca. 88 mol-%. und einer Viskosität der 4%igen wäßrigen Lösungen von 18-40 mPa·s.

Die Konzentration der wäßrigen Lösung, deren maximale Einstellung durch das Molekulargewicht des Polyvinylalkohols nach oben begrenzt wird, beträgt mindestens 0,1 Gew.-%. Je nach Viskositätsstufe wird vorzugsweise in Konzentrationen von 2 bis 30 Gew.-% gearbeitet. Vorzugsweise wird mit einer 1 bis 25 Gew.-%igen Lösung gearbeitet, besonders bevorzugt mit einer Konzentration von 5 bis 15 Gew.%. Der Viskositätsbereich der fertigen Komposition nach Zugabe der weiter unten beschriebenen Zusätze liegt unter 10.000 mPa·s, vorzugsweise unter 1000 mPa·s, insbesondere unter 500 mPa·s. Dieser wird innerhalb der angegebenen Konzentrationsbereiche erreicht, wenn Polyvinylalkohole verwendet werden, deren Molekulargewichte so bemessen sind, daß die Viskosität der 4%igen wäßrigen Lösungen bei 20 °C zwischen 4 und 30 mPa·s liegt.

Als wenigstens bifunktionelle, vollständig als Hydrogensulfitaddukt maskierte Aldehyde mit wenigstens 3 Kohlenstoffatomen, aus denen im sauren Medium zur Vernetzung befähigte Aldehydgruppen kontrolliert freisetzbar sind, eignen sich beispielsweise Derivate von Malonaldehyd, Succinaldehyd, 2-Hydroxysuccinaldehyd, Glutaraldehyd, 3-Methylglutaraldehyd, 3-Hydroxyglutaraldehyd, Adipaldehyd, 2-Hydroxyadipaldehyd, Heptandial, Octandial, Nonandial, Decandial sowie cis- und trans-2-Butendial oder Polyacrolein sowie Dialdehydstärken. Geeignete Derivate dieser Aldehyde sind deren Addukte mit Alkalihydrogensulfiten. Besonders bevorzugte Komponenten sind die Addukte von Natrium- oder Kaliumhydrogensulfit an Glutaraldehyd und Succinaldehyd, insbesondere Glutaraldehydbis(natriumhydrogensulfit) und Succinaldehydbis(natriumhydrogensulfit). Es können natürlich auch Gemische verschiedener Addukte eingesetzt werden.

Die Einsatzmenge dieser Komponente wird so bemessen, daß das Mol-Verhältnis (Bisulfit-Addukt zu Vinylalkohol-Einheiten) von (0,0001 bis 0,5) :1, vorzugsweise von (0,005 bis 0,05) : 1 beträgt.

In den erfindungsgemäßen Polyvinylalkohol-Kompositionen als Säure reagierende Verbindungen sind entweder Brönsted-Säuren oder Lewis-Säuren. Als Brönsted-Säuren eignen sich vorzugsweise Borsäure, meta-Phosphorsäure, ortho-Phosphorsäure oder acide Salze der ortho-Phosphorsäure. Weiterhin geeignete Brönstedt-Säuren besitzen pK_{S}-Werte von unter 2,5, beispielsweise wäßrige Mineralsäuren wie Schwefelsäure, Salzsäure oder Benzolsulfonsäure sowie p-Toluolsulfonsäure. Sie können für sich alleine oder mit den vorgenannten Säuren zur Einstellung eines bestimmten pH-Wertes verwendet werden. Als Lewis-Säuren finden wasserlösliche Salze mehrwertiger Kationen Verwendung, die in wäßriger Lösung Hydrolysegleichgewichte ausbilden, insbesondere Salze des Cr(III), Al(III), Zr(IV) oder Fe(III), beispielsweise Chrom(III)nitrat, Aluminiumchlorid, Aluminiumnitrat, Zirkonoxichlorid oder Eisen(III)chlorid. Es können selbstverständlich Gemische der vorgenannten Verbindungen eingesetzt werden.

Die Menge der als Säure reagierenden Verbindung wird vorzugsweise so bemessen, daß sich ein pH-Wert unterhalb von 6, insbesondere unterhalb von 4,5, besonders bevorzugt 1 bis 3,5 in der Polyvinylalkohol-Komposition einstellt. Vorzugsweise werden mindestens 0,001 Gew.-%, insbesondere 0,1 bis 50 Gew.-%, bezogen auf die Masse des Polyvinylalkohols, der als Säure reagierenden Verbindung eingesetzt.

Es werden vorzugsweise Verbindungen verwendet, die mit dem Polyvinylalkohol zusätzlich Komplexverbindungen eingehen können. Besonders bevorzugt ist die Verwendung von Aluminiumchlorid oder Aluminiumnitrat. Der Anteil der als Säure reagierenden Verbindung, die mit Polyvinylalkohol zusätzlich Komplexverbindungen eingeht, beträgt vorzugsweise mindestens 5 Gew.-%, insbesondere 10 bis 50 Gew. %, bezogen auf die Masse des Polyvinylalkohols.

Gegenstand der Erfindung ist auch ein Verfahren zur Herstellung der erfindungsgemäßen Kompositionen in Form wäßriger Lösungen, indem zunächst eine wäßrige Lösung des Polyvinylalkohols im gewünschten Konzentrationsbereich hergestellt wird und diese mit dem vollständig als wasserlösliches Hydrogensulfitaddukt maskierten Polyaldehyd und der als Säure reagierenden Verbindung vermischt wird, vorzugsweise durch Zugabe wäßriger Lösungen dieser Komponenten. Die Reihenfolge der Zugabe ist nicht kritisch. Die Lösung besitzt einen durch die Auswahl der als Säurereagierenden Verbindungen erreichbaren hinreichend niedrigen pH-Wert, der eine zeitabhängig kontrollierte Hydrolyse der Hydrogensulfit-Addukte erlaubt und gleichzeitig eine Vernetzung des Polyvinylalkohols über Acetalbindungen gestattet. Dieser pH-Wert liegt unterhalb von 6, vorzugsweise unterhalb von 4,5, insbesondere unterhalb von 3,5.

Es ist weiterhin möglich, daß die vollständig als Hydrogensulfitaddukt maskierten wenigstens bifunktionellen Aldehyde in situ in der vorliegenden Polyvinylalkohol-Lösung durch Zugaben der freien Aldehyde und zu den vorhandenen Aldehydgruppen mindestens stöchiometrischen Mengen an Alkalihydrogensulfiten, -disulfiten oder -pyrosulfiten hergestellt werden. Dieser Schritt wird vorzugsweise vor Zugabe der als Säure reagierenden Verbindung vorgenommen. Weiterhin ist es möglich, im sauren Milieu, vorzugsweise bei einem pH-Wert unterhalb von 6 zunächst aus anderen spaltbaren Aldehydderivaten, beispielsweise aus Acetalen, die freien Aldehyde zu generieren und diese in situ bei geeigneten pH-Werten durch Zugabe mindestens stöchiometrischer Mengen an Alkalihydrogensulfiten, -disulfiten oder -pyrosulfiten in deren Hydrogensulfitaddukte zu überführen. Geeignete Acetale sind bespielsweise die cyclischen Acetale 2,5-Dimethoxytetrahydrofuran, 2,5-Diethoxytetrahydrofuran sowie 2,6-Dimethoxytetrahydro-2H-pyran und 2,6-Diethoxytetrahydro-2H-pyran. Besonders geeignete Verbindungen aus dieser Gruppe sind die Bisdimethyl- und Bisdiethylacetale des Malondialdehyds, Succindialdehyds und Glutardialdehyds.

Grundsätzlich ist nicht entscheidend, ob sich bei den zwei letztgenannten Varianten die Bildung der Hydrogensulfitaddukte quantitativ vollzieht, da sich nach Zugabe der beschriebenen Salze, die in saurer wäßriger Lösung eine Gleichgewichtskonzentration an Hydrogensulfitionen liefern, zunächst ein pH-abhängiges Gleichgewicht zwischen den freien Aldehyden und deren Hydrogensulfitaddukten einstellen wird.

Eine weitere Ausgestaltungsform eines Verfahrens zur Herstellung der erfindungsgemäßen Kompositionen in Form wäßriger Lösungen mit einer verlängerten Lagerstabilität zur Herstellung von bei Raumtemperatur vernetzenden Filmen zur Herstellung kochwasserresistenter Klebverbindungen und Folien besteht darin, daß eine feste, homogene, wasserlösliche Polyvinylalkohol-Vormischung vorzugsweise in Form eines lagerstabilen Polyvinylalkohol-Granulats hergestellt wird, die als Vernetzungskomponente die vorbeschriebenen vollständig als Hydrogensulfitaddukt maskierten Aldehyde mit wenigstens 3 Kohlenstoffatomen bereits enthält und die anschließend in eine wäßrige Lösung überführt wird, zu der die vorbeschriebenen als Säure reagierenden Verbindungen zugesetzt werden.

Zur Herstellung dieser Polyvinylalkohol-Vormischung wird von einem zumindest teilweise wasserlöslichen Polyvinylalkohol-Granulat oder -Pulver ausgegangen. Vorzugsweise geeignetes Polyvinylalkohol-Granulat besitzt Partikeldurchmesser von 0,1 bis 5 mm. Diesem Granulat wird mittels einer üblichen Mischvorrichtung, beispielsweise Taumelmischern, Planetenrührwerken oder Zwangsmischem, der vollständig als Hydrogensulfitaddukt maskierten Aldehyde mit wenigstens 3 Kohlenstoffatomen, vorzugsweise in Form einer wäßrigen Lösung zugemischt. Die gegebenenfalls zugeführte Menge Wasser wird so bemessen, daß die aldehydische Vernetzungskomponente während des Mischvorgangs unter Quellung des Granulats weitgehend von diesem aufgenommen wird, so daß nach Trocknung des Granulats ein weitgehend homogenes Produkt resultiert. Eine Wärmezufuhr während des Mischvorgangs ist nicht nötig. Bei der anschließenden Trocknung sollen die Trocknungstemperaturen die thermischen Zersetzungstemperaturen der Aldehydderivate nicht überschreiten.

Aus dieser Polyvinylalkohol-Vormischung in Form von Polyvinylalkohol-Granulat läßt sich in an sich bekannter Weise eine homogene wäßrige Lösung herstellen, die die als Hydrogensulfit maskierten Aldehydverbindungen bereits enthält. Diese Lösung kann dann mit den vorbeschriebenen als Säure reagierenden Verbindungen zu den erfindungsgemäßen wäßrigen Polyvinylalkohol-Kompositionen vermischt werden.

Im Gegensatz zu reinen Mischungen aus trocknem Polyvinylalkohol-Granulat mit pulverförmigen Hydrogensulfitaddukten der wenigstens bifunktionellen Aldehyde mit mindestens 3 Kohlenstoffatomen sind die Vormischungen in Form von modifiziertem Polyvinylalkohol-Granulat auch unter extremen Lagerbedingungen, beispielsweise bei hoher Luftfeuchtigkeit, über Monate lagerfähig, so daß auch nach Ablauf längerer Zeit homogene wäßrige Lösungen erhalten werden können.

Die feste, homogene wasserlösliche Polyvinylalkohol-Vormischung sowie das Verfahren zu ihrer Herstellung sind ebenfalls Gegenstand der vorliegenden Erfindung.

Die beschriebenen erfindungsgemäßen Kompositionen in Form wäßriger Lösungen ergeben vorteilhafterweise ohne Wärmeaktivierung kochwasserresistente Klebverbindungen und Folien und zeichnen sich gegenüber solchen aus dem Stand der Technik durch eine verbesserte Lagerstabilität von mindestens 4 Wochen aus. Durch eine weitere Behandlung der hergestellten Filme bei erhöhter Temperatur kann ihre Kochwasserbeständigkeit noch weiter verbessert und die Trocknungszeit verkürzt werden.

Die erfindungsgemäßen Kompositionen in Form wäßriger Lösungen eignen sich zur Herstellung von Klebstoffen für cellulosische Substrate wie Holz, Papier oder Karton, insbesondere als wasserresistente Klebstoffe für Holz und Papier, zur Herstellung von Papierlaminaten, Spiral- oder Parallelhülsen. Aus den wäßrigen Lösungen lassen sich Gießfolien herstellen, die sich als wasserresistentes Verpackungsmaterial mit guten Gasbarriereeigenschaften, auch als Bestandteil von Laminaten in Verbundfolien, eignen oder die für den Einsatz als Beschichtungsmaterial für Baustoffe, zur Herstellung von Batteriemembranen oder Druckpermeations-Trennmembranen zur Stofftrennung wäßrig/organischer Gemische tauglich sind. Weitere Einsatzgebiete sind Schlichtemittel für Textil, Glasfasern, als Bindemittel für Vliesverbindungen, zur Herstellung von wasserfesten Fasern, insbesondere solchen zur Verstärkung von Baustoffen, weiterhin als elektrophotographische Transfer-Schichten und als wasserdampfpermeable Sanitärunterlagen.

Die folgenden Beispiele dienen zur Erläuterung der Erfindung. Alle Angaben für Teile und Prozente beziehen sich auf das Gewicht, soweit nicht anders vermerkt.

### Beispiele

### Beispiele 1 bis 3 sowie Vergleichsbeispiele V1 und V2

100 Gewichtsteile einer 10 %igen Lösung eines teilverseiften Polyvinylalkohols vom Hydrolysegrad 88 Mol-% und einer Viskosität der 4 %igen wäßrigen Lösung von 18 mPa·s bei 20 °C versetzte man unter Rühren mit 3,5 Teilen einer gesättigten, ca. 30 %igen homogenen Lösung von Aluminiumchlorid in Wasser. Anschließend wurden die in der Tabelle 1 aufgeführten Zusätze in die Mischung eingerührt. Aus diesen Lösungen stellte man ca. 0,25 mm starke Gießfilme her, welche 48 Stunden bei Raumtemperatur getrocknet wurden. Zur Bestimmung der kochwasserunlöslichen Anteile wurden jedem Film jeweils 4 etwa 2 cm x 2 cm große Stücke entnommen. Mit der einen Hälfte erfolgte eine Doppelbestimmung zur Ermittlung der Trockensubstanz T_{S} (%) (6 Stunden bei 120 °C). Die andere Hälfte wurde gewogen (m₁,m₂) und einer zweistündigen Behandlung in kochendem Wasser unterzogen. Die kochwasserunlöslichen Anteile der Filme wurden anschließend dem Wasserbad entnommen und 6 Stunden bei 120 °C getrocknet (m₁ₖ, m₂ₖ). Die in der Tabelle 1 angegebenen prozentualen kochwasserunlöslichen Anteile ergeben sich jeweils aus 100 x mᵢₖ/(mᵢ x Tₛ/100), wobei der Mittelwert aus den beiden Einzelbestimmungen angegeben wird:

**Tabelle 1**

| Beispiel | Zusatz | pH | mol Vernetzer/mol Vin-OH | % kochwasserunl. Anteil | Viskosität Brookfield 2/50 mPa·s | Viskosität Brookfield 2/50 n. 4 Wochen / mPa·s |
|---|---|---|---|---|---|---|
| 1 | 0,5 GT GABNa 20 % | 3,4 | 0,0018 | 28,6 | 366 | 535 |
| 2 | 2,5 GT GABNa 20 % | 3,4 | 0,009 | 93,8 | 322 | 528 |
| 3 | 5,0 GT GABNa 20 % | 3,4 | 0,018 | 93,9 | 299 | 532 |
| V1 | 0,65 GT Glutardialdehyd 50 % | 3,4 | 0,018 | 94,9 | 394 | n. 24 Stunden geliert |
| V2 | kein Zusatz | 3,4 | 0 | 0 | 364 | 448 |
| Erläuterung: GABNa 20 % : 20 %ige Lösung von Glutardialdehydbis(natriumhydrogensulfit) in Wasser | | | | | | |

### Beispiel 4 und Vergleichsbeispiel V3

### Herstellung einer Vormischung in Form eines modifizierten Polyvinylalkohol-Granulats

In einem handelsüblichen Zwangsmischer mit Heiz/Kühlmantel (35 l Inhalt) wurden 6 kg teilverseifter Polyvinylalkohol vom Hydrolysegrad 88 Mol.-% und einer Viskosität der 4%igen wäßrigen Lösung von 18 mPa·s vorgelegt. Bei Mantelkühlung wurde zunächst bei einer Umdrehungsgeschwindigkeit von 1200 U/Min. gerührt, woraufhin die Temperatur leicht anstieg. Ab einer Temperatur von 40 °C wurde innerhalb von 45 Minuten eine Lösung von 240 g Glutardialdehydbis(natriumhydrogensulfit) in 960 g Wasser zugegeben. Die Temperatur stieg auf maximal 49 °C an. Anschließend wurde bei einer Umdrehungszahl von 600 U/Min. auf unter 40 °C abgekühlt. Das Produkt wurde entnommen und 6 Stunden bei 120 °C auf einen Feststoffgehalt von 99,6 % getrocknet. Die mikroskopische Bild-Analyse ergab, daß ein homogenes Granulat, frei von pulverförmigen Nebenbestandteilen, vorlag.

### Vergleichsbeispiel V3

Derselbe Polyvinylalkohol wurde mit Glutardialdehydbis(natriumhydrogensulfit) vermischt, jedoch ohne Zusatz von Wasser. Es resultierte nach mikroskopischer Bildanalyse ein heterogenes Gemisch, das Polyvinylalkohol-Granulat und daneben amorphe pulverförmige Bestandteile aufwies.

Die Produkte des Beispiels 4 und des Vergleichsbespiels 3 wurden einer Lagerung unter nachfolgend aufgeführten Bedingungen unterzogen:

| | |
|---|---|
| Klima 1 | offene Lagerung im Laborklima mit wechselnden Luftfeuchtigkeits- und Temperaturschwankungen |
| Klima 2 | Lagerung bei trockener Atmosphäre (über Silicagel) bei 25 °C |
| Klima 3 | Lagerung bei feuchter Atmosphäre (über Wasser) bei 25 °C |

Die Produkte wurden nach Ablauf der Lagerungsfolgen in den jeweiligen Klimata hinsichtlich des visuellen Verhaltens und der Herstellbarkeit einer 10 %igen wäßrigen Lösung (90 °C) beurteilt. Die Ergebnisse sind in Tabelle 2 zusammengefaßt:

| **Lagerungsfolge** | **Beispiel** | **visuelle Beurteilung** | **10 %ige Lösung** |
|---|---|---|---|
| 4 Wochen Klima 1 | 4 | Granulat unverändert | klar gelöst |
| 4 Wochen Klima 1 | V3 | Produkt unverändert | ungelöste Bestandteile |
| 4 Wochen Klima 2 | 4 | Granulat unverändert | klar gelöst |
| 4 Wochen Klima 2 | V3 | Produkt unverändert | ungelöste Bestandteile |
| 4 Wochen Klima 3 | 4 | leicht eingeschränkte Rieselfähigkeit durch Feuchtigkeitsaufnahme | klar gelöst |
| 4 Wochen Klima 3 | V3 | Klumpenbildung | ungelöste Bestandteile |
| 16 Wochen Klima 1 | 4 | Produkt unverändert | klar gelöst |
| 16 Wochen Klima 2 | 4 | Produkt unverändert | klar gelöst |
| 16 Wochen Klima 3 | 4 | leicht eingeschränkte Rieselfähigkeit durch Feuchtigkeitsaufnahme | klar gelöst |

## Patentansprüche

1. Komposition in Form einer wäßrigen Lösung, enthaltend Polyvinylalkohol, mindestens einen vollständig als wasserlösliches Hydrogensulfitaddukt maskierten Polyaldehyd mit wenigstens 3 Kohlenstoffatomen sowie mindestens eine in Wasser als Säure reagierende Verbindung.

2. Komposition nach Anspruch 1, dadurch gekennzeichnet, daß der Polyvinylalkohol einen Hydrolysegrad von 80 bis 98 Mol-% besitzt.

3. Komposition nach Anspruch 1, dadurch gekennzeichnet, daß der Polyaldehyd Glutaraldehyd ist.

4. Komposition nach Anspruch 1, dadurch gekennzeichnet, daß das Molverhältnis von Hydrogensulfit-Addukt zu Vinylalkohol-Einheiten (0,005 bis 0,05): 1 beträgt.

5. Komposition nach Anspruch 1, dadurch gekennzeichnet, daß die als Säure reagierende Verbindung ein wasserlösliches Salz eines mehrwertigen Kations ist.

6. Komposition nach Anspruch 1, dadurch gekennzeichnet, daß die als Säure reagierenden Verbindung zusätzlich mit dem Polyvinylalkohol eine Komplexverbindung bilden kann.

7. Komposition nach Anspruch 1, dadurch gekennzeichnet, daß der Anteil der als Säure reagierenden Verbindung 10 bis 50 Gew.-%, bezogen auf die Masse des Polyvinylalkohols, beträgt.

8. Verfahren zur Herstellung einer Komposition nach Anspruch 1, dadurch gekennzeichnet, daß eine wäßrige Lösung von Polyvinylalkohol hergestellt wird und mit mindestens einem vollständig als wasserlösliches Hydrogensulfit-Addukt maskierten Polyaldehyd mit wenigstens 3 Kohlenstoffatomen und mindestens einer in Wasser als Säure reagierenden Verbindung vermischt wird. 3 Kohlenstoffatomen und mindestens einer in Wasser als Säure reagierenden Verbindung vermischt wird.

9. Verfahren zur Herstellung einer Komposition nach Anspruch 1, dadurch gekennzeichnet, daß eine wäßrige Lösung von Polyvinylalkohol hergestellt wird und mit mindestens einem Polyaldehyd mit wenigstens 3 Kohlenstoffatomen oder dessen Acetal sowie einer mindestens zum Polyaldehyd stöchiometrischen Menge an Alkalihydrogensulfit, Alkalidisulfit oder Alkalipyrosulfit und mindestens einer in Wasser als Säure reagierenden Verbindung vermischt wird.

10. Verfahren zur Herstellung einer Komposition nach Anspruch 1, dadurch gekennzeichnet, daß ein zumindest teilweise wasserlösliches Polyvinylalkohol-Granulat oder -Pulver mit dem vollständig als Hydrogensulfit-Addukt maskierten Polyaldehyd homogen gemischt wird unter Ausbildung einer festen, homogenen, wasserlöslichen Polyvinylalkohol-Vormischung, die Polyvinylalkohol-Vormischung in Wasser gelöst wird und mit mindestens einer in Wasser als Säure reagierenden Verbindung versetzt wird.

11. Feste, homogene, wasserlösliche Polyvinylalkohol-Vormischung, enthaltend Polyvinylalkohol sowie mindestens einen vollständig als wasserlösliches Hydrogensulfit-Addukt maskiertes Polyaldehyd mit wenigstens 3 Kohlenstoffatomen.

12. Verfahren zur Herstellung einer festen, homogenen Polyvinylalkohol-Vormischung nach Anspruch 11, dadurch gekennzeichnet, daß ein zumindest teilweise wasserlösliches Polyvinylalkohol-Granulat mit einer wäßrigen Lösung eines vollständig als Hydrogensulfit-Addukt maskierten Polyaldehyds homogen gemischt und anschließend getrocknet wird.

13. Verwendung der Komposition nach Anspruch 1 als Klebstoff.

14. Verwendung der Komposition nach Anspruch 1 in Gießfolien.

## Claims

1. A composition in the form of an aqueous solution comprising polyvinyl alcohol, at least one polyaldehyde having at least 3 carbon atoms and being masked completely as a water-soluble hydrogen sulfite adduct, and at least one compound which is acidic in water.

2. The composition as claimed in claim 1, wherein the polyvinyl alcohol has a degree of hydrolysis of from 80 to 98 mol-%.

3. The composition as claimed in claim 1, wherein the polyaldehyde is glutaraldehyde.

4. The composition as claimed in claim 1, wherein the molar ratio of hydrogen sulfite adduct to vinyl alcohol units is (from 0.005 to 0.05):1.

5. The composition as claimed in claim 1, wherein the acidic compound is a water-soluble salt of a polyvalent cation.

6. The composition as claimed in claim 1, wherein the acidic compound is additionally able to form a complex compound with the polyvinyl alcohol.

7. The composition as claimed in claim 1, wherein the proportion of the acidic compound is from 10 to 50% by weight, based on the mass of the polyvinyl alcohol.

8. A process for preparing a composition as claimed in claim 1, which comprises preparing an aqueous solution of polyvinyl alcohol and mixing it with at least one polyaldehyde having at least 3 carbon atoms and being masked completely as a water-soluble hydrogen sulfite adduct and with at least one compound which is acidic in water.

9. A process for preparing a composition as claimed in claim 1, which comprises preparing an aqueous solution of polyvinyl alcohol and mixing it with at least one polyaldehyde having at least 3 carbon atoms, or its acetal, and with an amount of alkali metal hydrogen sulfite, alkali metal disulfite or alkali metal pyrosulfite which is at least stoichiometric to the polyaldehyde, and with at least one compound which is acidic in water.

10. A process for preparing a composition as claimed in claim 1, which comprises homogeneously mixing an at least partially water-soluble polyvinyl alcohol powder or granules with the polyaldehyde which is masked completely as a hydrogen sulfite adduct to form a solid, homogeneous, water-soluble polyvinyl alcohol premix, dissolving the polyvinyl alcohol premix in water, and adding at least one compound which is acidic in water.

11. A solid, homogeneous, water-soluble polyvinyl alcohol premix comprising polyvinyl alcohol and at least one polyaldehyde having at least 3 carbon atoms and being masked completely as a water-soluble hydrogen sulfite adduct.

12. A process for preparing a solid, homogeneous polyvinyl alcohol premix as claimed in claim 11, which comprises homogeneously mixing at least partially water-soluble polyvinyl alcohol granules with an aqueous solution of a polyaldehyde which is masked completely as a hydrogen sulfite adduct and then drying the mixture.

13. The use of the composition as claimed in claim 1 as an adhesive.

14. The use of the composition as claimed in claim 1 in casting films.

## Revendications

1. Composition sous forme d'une solution aqueuse contenant du poly(alcool vinylique), au moins un polyaldéhyde ayant au moins 3 atomes de carbone, complètement masqué comme adduit hydrosoluble de bisulfite, ainsi qu'au moins un composé réagissant comme acide dans l'eau.

2. Composition selon la revendication 1, caractérisée en ce que le poly(alcool vinylique) possède un degré d'hydrolyse de 80 à 98 % molaires.

3. Composition selon la revendication 1, caractérisée en ce que le polyaldéhyde est un glutaraldéhyde.

4. Composition selon la revendication 1, caractérisée en ce que le rapport molaire de l'adduit de bisulfite aux motifs alcool vinylique est de (0,005 à 0,05):1.

5. Composition selon la revendication 1, caractérisée en ce que le composé réagissant comme acide est un sel hydrosoluble d'un cation multivalent.

6. Composition selon la revendication 1, caractérisée en ce que le composé réagissant comme acide peut de plus former un composé complexe avec le poly(alcool vinylique).

7. Composition selon la revendication 1, caractérisée en ce que le taux du composé réagissant comme acide est de 10 à 50 % massiques par rapport à la masse du poly(alcool vinylique).

8. Procédé pour la préparation d'une composition selon la revendication 1, caractérisé en ce qu'on prépare une solution aqueuse de poly(alcool vinylique) et on mélange avec au moins un polyaldéhyde ayant au moins 3 atomes de carbone, complètement masqué comme adduit hydrosoluble de bisulfite, et au moins un composé réagissant comme acide dans l'eau.

9. Procédé pour la préparation d'une composition selon la revendication 1, caractérisé en ce qu'on prépare une solution aqueuse de poly(alcool vinylique) et on mélange avec au moins un polyaldéhyde ayant au moins 3 atomes de carbone, ou avec son acétal, ainsi qu'au moins une quantité stoechiométrique, par rapport au polyaldéhyde, de bisulfite alcalin, de disulfite alcalin ou de pyrosulfite alcalin et au moins un composé réagissant comme acide dans l'eau.

10. Procédé pour la préparation d'une composition selon la revendication 1, caractérisé en ce qu'on réalise un mélange homogène d'un granulé ou poudre de poly(alcool vinylique) au moins partiellement hydrosoluble avec le polyaldéhyde complètement masqué comme adduit de bisulfite, en formant un pré-mélange de poly(alcool vinylique) solide, homogène, hydrosoluble, on dissout le pré-mélange de poly(alcool vinylique) dans l'eau et on ajoute au moins un composé réagissant comme acide dans l'eau.

11. Pré-mélange de poly(alcool vinylique) solide, homogène, hydrosoluble, contenant du poly(alcool vinylique), ainsi qu'au moins un polyaldéhyde ayant au moins 3 atomes de carbone, complètement masqué comme adduit hydrosoluble de bisulfite.

12. Procédé pour la préparation d'un pré-mélange de poly(alcool vinylique) solide, homogène, selon la revendication 11, caractérisé en ce qu'on réalise un mélange homogène d'un granulé de poly(alcool vinylique) au moins partiellement hydrosoluble avec une solution aqueuse d'un polyaldéhyde complètement masqué comme adduit de bisulfite et on sèche ensuite.

13. Utilisation de la composition selon la revendication 13 comme adhésif.

14. Utilisation de la composition selon la revendication 1 dans des feuilles coulées.
